(19) Europäisches Patentamt
European Patent Office
Office européen des brevets

(11) EP 3 415 537 A1

(12) EUROPEAN PATENT APPLICATION
published in accordance with Art. 153(4) EPC

(43) Date of publication:
**19.12.2018 Bulletin 2018/51**

(21) Application number: **17750295.2**

(22) Date of filing: **08.02.2017**

(51) Int Cl.:
***C08B 11/12*** *(2006.01)* ***B82Y 30/00*** *(2011.01)*
***C08J 3/03*** *(2006.01)* ***C08J 3/09*** *(2006.01)*

(86) International application number:
**PCT/JP2017/004618**

(87) International publication number:
**WO 2017/138574 (17.08.2017 Gazette 2017/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.02.2016 JP 2016021533**

(71) Applicant: **Nippon Paper Industries Co., Ltd.
Tokyo 114-0002 (JP)**

(72) Inventors:
- **ONOGI, Shinichi
Tokyo 114-0002 (JP)**
- **NAKAYAMA, Takeshi
Tokyo 114-0002 (JP)**
- **YOSHIMURA, Tomoaki
Chiba-shi
Chiba 267-0056 (JP)**

(74) Representative: **Cockerton, Bruce Roger
Carpmaels & Ransford LLP
One Southampton Row
London WC1B 5HA (GB)**

# (54) MODIFIED CARBOXYMETHYLATED CELLULOSE NANOFIBER DISPERSION AND METHOD FOR MANUFACTURING SAME

(57) Provided is a cellulose nanofiber which can give a dispersion liquid that is excellent in dispersion stability in an organic solvent or a resin and also is transparent and less colored.

A dispersion liquid having a modified carboxymethylated cellulose nanofiber dispersed in a dispersion medium, wherein the dispersion medium comprises an organic solvent,
wherein the modified carboxymethylated cellulose nanofiber comprises a glucose unit represented by the formula (1):

[Chem. 1]

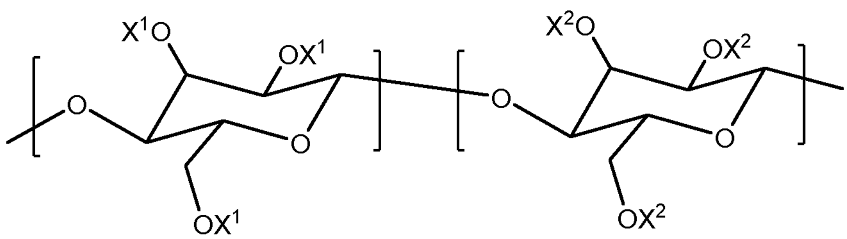

(1)

(wherein $X^1$ is independently H or a group represented by $-CH_2COOH$,
$X^2$ is independently H, $-CH_2COOH$, or a group represented by any of the formulas (2) to (4), with the proviso that at least one of $X^2$ groups is a group represented by any of the formulas (2) to (4))

EP 3 415 537 A1

[Chem. 2]

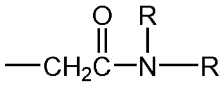

(2)

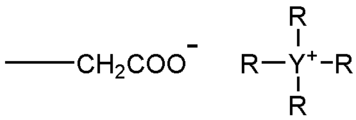

(3)

$$—CH_2COOR'$$

(4)

(in the formula (2), R is independently H, an alkyl group with 1 to 10 carbon atoms, an aryl group with 6 to 20 carbon atoms, or an aralkyl group with 7 to 20 carbon atoms, with the proviso that at least one of R groups is said alkyl group, said aryl group, or said aralkyl group,
in the formula (3), Y is N or P, and R is defined in the same way as in the formula (2),
in the formula (4), R' is an alkyl group with 1 to 10 carbon atoms, an aryl group with 6 to 20 carbon atoms, or an aralkyl group with 7 to 20 carbon atoms).

**Description**

TECHNICAL FIELD

The present invention relates to a dispersion liquid of a modified carboxymethylated cellulose nanofiber, and a method for preparing the same.

BACKGROUND ART

In recent years, from viewpoints such as resource saving, energy saving, reduction of $CO_2$ emission and biodegradability, plant-derived materials and energy are attracting attention, and efficient use of cellulose produced by plants and microorganisms is being promoted. In particular, cellulose nanofibers obtained by fibrillating pulp derived from wood, herbage, etc. are extremely fine fibers with a thickness of several nanometers to several tenths of nanometers and having many excellent characteristics such as relatively low weight but high modulus of elasticity, high strength, difficulty in thermal expansion, and high transparency. Thus, such cellulose nanofibers are expected to be utilized in many applications such as structural and optical materials.

There have been some reported methods for preparing cellulose nanofibers: for example, one method involves fibrillating an anionically modified cellulose fiber (into an anionically modified micro fibrillated plant fiber), and another method involves disintegrating cellulose fibers after oxidation catalyzed with an N-oxyl compound and a halogenated alkali metal salt (PTL 1, NPL 1).

CITATION LIST

PATENT LITERATURE

PTL 1: International Patent Publication No. WO 2011/115154

NON-PATENT LITERATURE

NPL 1: Biomacromolecules, 2006, Vol.7, No.6, p.1687-1691

SUMMARY OF INVENTION

TECHNICAL PROBLEM

However, cellulose nanofibers prepared by such methods are extremely high in hydrophilicity and are poor in dispersion stability in an organic solvent or resin with different polarity. In particular, when an attempt is made to apply cellulose nanofibers to optical or transparent materials which require high transparency, the inclusion of such nanofibers results in reduced transparency of the resulting composite materials. Furthermore, in some applications which need colorless cellulose nanofibers, the cellulose nanofibers prepared by the above methods are hard to apply because they are less resistant to high temperatures and tend to get colored easily upon preparation of dispersion liquids in organic solvent or composite materials with plastic materials.

Under these circumstances, the present invention has as its object to provide a cellulose nanofiber dispersion liquid that is excellent in dispersibility in an organic solvent or a resin and also is transparent and less colored.

SOLUTION TO PROBLEM

[1] A dispersion liquid having a modified carboxymethylated cellulose nanofiber dispersed in a dispersion medium,

wherein the dispersion medium comprises an organic solvent,
wherein the modified carboxymethylated cellulose nanofiber comprises a glucose unit represented by the formula (1) shown hereinbelow.

[2] The dispersion liquid as set forth in [1], wherein the organic solvent has a boiling point of 50 to 250°C at normal pressures.
[3] The dispersion liquid as set forth in [1] or [2], wherein the organic solvent is a water-soluble organic solvent

selected from the group consisting of methanol, ethanol, 1-propanol, 2-propanol, 1-butanol, 2-butanol, 2-methyl-1-propanol, 2-methyl-2-propanol, acetone, methyl ethyl ketone, 1,4-dioxane, N-methyl-2-pyrrolidone, tetrahydrofuran, N,N-dimethylformamide, N,N-dimethylacetamide, dimethyl sulfoxide, acetonitrile, and combinations thereof.
[4] The dispersion liquid as set forth in any of [1] to [3], wherein the cellulose nano fiber has a degree of substitution with X groups of 0.02 to 0.50, which is defined by the number of X groups, where $X^1$ and $X^2$ are each $-CH_2COOH$ or represented by any of the formulas (2) to (4), per glucose unit.
[5] The dispersion liquid as set forth in any of [1] to [4], wherein the modified carboxymethylated cellulose nanofiber has a number-average fiber diameter of 2 to 50 nm.
[6] The dispersion liquid as set forth in any of [1] to [5], wherein the dispersion medium comprises a water-soluble organic solvent and water.
[7] A method for preparing the dispersion liquid as set forth in [1], the method comprising the steps of:

(1A) preparing a dispersion liquid having a carboxymethylated cellulose nanofiber dispersed in a mixed solvent of water and a water-soluble organic solvent; and
(1B) adding to the dispersion liquid an organic alkali selected from amines, organic onium salts containing a hydroxide ion as a counter ion, and combinations thereof, to effect carboxymethyl group modification.

[8] A method for preparing the dispersion liquid as set forth in [1], the method comprising the steps of:

(2A) preparing a dispersion liquid having a carboxymethylated cellulose nanofiber dispersed in water; and
(2B) adding to the dispersion liquid an organic alkali selected from amines, organic onium salts containing a hydroxide ion as a counter ion, and combinations thereof, as well as a water-soluble organic solvent, to effect carboxymethyl group modification.

[9] A method for preparing the dispersion liquid as set forth in [1], the method comprising the steps of:

(3C) preparing a dispersion liquid comprising carboxymethylated cellulose, a mixed solvent of water and a water-soluble organic solvent, as well as an organic alkali selected from amines, organic onium salts containing a hydroxide ion as a counter ion, and combinations thereof; and
(3D) effecting carboxymethyl group modification while subjecting the dispersion liquid to fibrillation treatment, or (3E) effecting carboxymethyl group modification to prepare a dispersion liquid comprising modified carboxymethylated cellulose and then subjecting the dispersion liquid to fibrillation treatment.

[10] A method for preparing the dispersion liquid as set forth in [1], the method comprising the steps of:

(4C) preparing a dispersion liquid comprising carboxymethylated cellulose, water, as well as an organic alkali selected from amines, organic onium salts containing a hydroxide ion as a counter ion, and combinations thereof;
(4D) effecting carboxymethyl group modification while subjecting the dispersion liquid to fibrillation treatment, or (4E) effecting carboxymethyl group modification to prepare a dispersion liquid comprising modified carboxymethylated cellulose and then subjecting the dispersion liquid to fibrillation treatment; and
(4F) adding a water-soluble organic solvent to the dispersion liquid obtained at the previous step.

[11] The method as set forth in any of [7] to [10], wherein the organic alkali is a quaternary ammonium salt containing a hydroxide ion as a counter ion.
[12] The method as set forth in any of [7] to [10], wherein the organic alkali is a primary, secondary or tertiary amine compound.

## ADVANTAGEOUS EFFECT OF INVENTION

The present invention can provide a cellulose nanofiber dispersion liquid that is excellent in dispersibility in an organic solvent or a resin and also transparent and less colored.

## DESCRIPTION OF EMBODIMENTS

Hereunder, the cellulose nano fiber dispersion liquid of the present invention will be described. In this invention, the numerical ranges include the values at their endpoints. That is to say, the range of "A to B" includes both A and B.

1. Dispersion liquid of a modified carboxymethylated cellulose nano fiber

The modified carboxymethylated cellulose nanofiber (hereinafter also referred to as "modified CM-CNF") refers to a carboxymethylated cellulose nanofiber having modified carboxyl groups. To be specific, the modified CM-CNF is represented by the formula (1).

[Chem. 1]

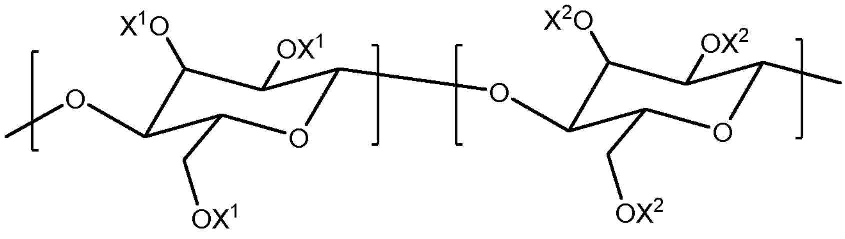

(1)

In the formula (1), $X^1$ is independently H or $-CH_2COOH$. $X^2$ is independently H, $-CH_2COOH$, or a group represented by any of the formulas (2) to (4), with the proviso that at least one of $X^2$ groups is a group represented by any of the formulas (2) to (4).

[Chem. 2]

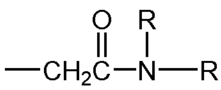 ; 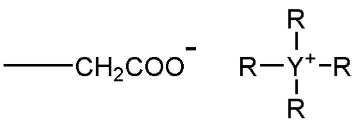 ; $-CH_2COOR'$

(2) (3) (4)

In the formula (2), R is independently H, an alkyl group with 1 to 10 carbon atoms, an aryl group with 6 to 20 carbon atoms, or an aralkyl group with 7 to 20 carbon atoms, with the proviso that at least one of R groups is said alkyl group, said aryl group, or said aralkyl group (these groups are hereinafter also referred to as "the alkyl group, etc."). In other words, the cellulose nanofiber of the present invention has the hydrophobic group R. The term "independently" means that a plurality of R groups may be different. The same holds true for other groups. Due to the presence of R, the cellulose nanofiber of this invention exhibits excellent dispersibility when dispersed in a dispersion medium composed of a mixed solution of water and a water-soluble organic solvent to prepare a dispersion liquid. From this viewpoint and for reasons of material availability, R when it is an alkyl group has preferably 1 to 6 carbon atoms, more preferably 2 to 5 carbon atoms. Preferred examples of the alkyl group include, but are not limited to, methyl group, ethyl group, propyl group, butyl group, propyl group, and hexyl group. Such groups may be linear, branched, or cyclic. When R is an aryl group, it has preferably 6 to 15 carbon atoms. Preferred examples of the aryl group include, but are not limited to, phenyl group, naphthyl group, and alkylphenyl and alkylnaphthyl groups which contain the aforementioned alkyl group as a substituent. When R is an aralkyl group, it has preferably 7 to 10 carbon atoms. Preferred examples of the aralkyl group include benzyl group. As described below, the group represented by the formula (2) is obtained by reacting a carboxymethyl group with an amine.

In the formula (3), Y is N or P, and R is defined in the same way as in the formula (2). From the viewpoint of enhancing hydrophobicity, it is preferred that two or more of R groups be the aforementioned alkyl, aryl or aralkyl groups, and it is more preferred that three or more of R groups be the aforementioned alkyl, aryl or aralkyl groups. From the viewpoints of availability, etc., R is preferably the aforementioned alkyl group, and Y is preferably N. As described below, the group represented by the formula (3) is obtained by reacting a carboxymethyl group with an ammonium salt or a phosphonium salt.

In the formula (4), R' is an alkyl group with 1 to 10 carbon atoms, an aryl group with 6 to 20 carbon atoms, or an aralkyl group with 7 to 20 carbon atoms. As described below, the group represented by the formula (4) is obtained by reacting a carboxymethyl group with a sulfonium salt.

The value defined as an average number of substituents present on the glucose ring per glucose unit is referred to as a degree of substitution. In the present invention, the degree of substitution with X groups where $X^1$ and $X^2$ are not H (hereinafter also referred to as "degree of substitution with X groups" for convenience sake) affects the dispersibility of cellulose nanofibers. Thus, the degree of substitution with X groups is preferably in the range of 0.02 to 0.50. The degree of substitution with X groups can be adjusted by the proportion of the number of H atoms relative to the number

of other groups as found in $X^1$ and $X^2$ in the unit represented by the formula (1) shown above. The degree of substitution with X groups can be determined according to a conventional method after the modified CM-CNF is treated with an acid to convert the groups of any of the formulas (2) to (4) to $-CH_2COOH$ groups.

In order to obtain the desired hydrophobicity, it is preferred that not less than 80% of the total of $X^1$ and $X^2$ (also referred to as "X groups") be accounted for by the groups represented by any of the formulas (2) to (4).

The dispersion medium comprises an organic solvent. The organic solvent is not limited, but is preferably water-soluble as described below. The dispersion medium may also contain water. In this case, the amount of water contained in the dispersion medium of the present invention is preferably not more than 50 wt.%, more preferably not more than 30 wt.%, still more preferably not more than 10 wt.%, particularly preferably not more than 1 wt.%. When water is contained in the dispersion medium in such a low amount, it is advantageous that the modified CM-CNF is easy to complex with other materials such as resin. Meanwhile, the amount of the organic solvent is adjusted to ensure that the amount of water is preferably not less than 0.001 wt.%, more preferably not less than 0.01 wt.%.

It is preferred that the dispersion medium comprise water and a water-soluble organic solvent. In this case, since the water-soluble organic solvent is amphiphilic, the dispersion medium may also contain a non-water-soluble organic solvent. In one embodiment, the dispersion medium is preferably a mixed solvent of water and a water-soluble organic solvent. The water-soluble organic solvent refers to an organic solvent that is miscible with water in any proportions. Examples of such an organic solvent include methanol, ethanol, 1-propanol, 2-propanol, 1-butanol, 2-butanol, 2-methyl-1-propanol, 2-methyl-2-propanol, acetone, methyl ethyl ketone, 1,4-dioxane, N-methyl-2-pyrrolidone, tetrahydrofuran, N,N-dimethylformamide, N,N-dimethylacetamide, dimethyl sulfoxide, acetonitrile, and combinations thereof. The proportions of water and the organic solvent can be adjusted as appropriate through dilution by blending or through concentration by a known technique such as filtration or distillation. In particular, from the viewpoints of solvent collection and recycling, and simplicity of industrial equipment, it is preferred that concentration be achieved by distillation; in some cases, the dispersion liquid of the present invention may be distilled by heating particularly for the purpose of reducing the amount of water. In this process, from the viewpoint that water can be preferentially removed, the water-soluble organic solvent is preferably a solvent having a boiling point exceeding 100°C at normal pressures. However, when the boiling point of the water-soluble organic solvent is too high, said solvent may be difficult to remove; thus, the boiling point of the water-soluble organic solvent is preferably not more than 250°C at normal pressures. Examples of such a water-soluble organic solvent include, but are not limited to, 2-butanol, 2-methyl-1-propanol, 1,4-dioxane, N-methyl-2-pyrrolidone, N,N-dimethylformamide, N,N-dimethylacetamide, and dimethyl sulfoxide.

The modified CM-CNF has a number-average fiber diameter of preferably 1 nm to 200 nm, more preferably 2 nm to 50 nm. The fiber diameter of the CNF can be measured through observation under microscope such as scanning electron microscope (SEM) or atomic force microscope (AFM).

The concentration of the modified CM-CNF in the dispersion liquid is in the range of preferably 0.1 to 20 wt.%, more preferably 0.5 to 10 wt.%.

## 2. Method for preparing the dispersion liquid

The dispersion liquid of the present invention can be prepared by any of the methods described below.

### [First preparation method]

A method for preparing the dispersion liquid, the method comprising the steps of:

(1A) preparing a dispersion liquid having a carboxymethylated cellulose nanofiber dispersed in a mixed solvent of water and a water-soluble organic solvent; and
(1B) adding to the dispersion liquid an organic alkali selected from amines, organic onium salts containing a hydroxide ion as a counter ion, and combinations thereof, to effect carboxymethyl group modification.

### [Second preparation method]

A method for preparing the dispersion liquid, the method comprising the steps of:

(2A) preparing a dispersion liquid having a carboxymethylated cellulose nanofiber dispersed in water; and
(2B) adding to the dispersion liquid the aforementioned organic alkali and a water-soluble organic solvent, to effect carboxymethyl group modification.

[Third preparation method]

A method for preparing the dispersion liquid, the method comprising the steps of:

(3C) preparing a dispersion liquid comprising carboxymethylated cellulose, a mixed solvent of water and a water-soluble organic solvent, as well as the aforementioned organic alkali; and
(3D) effecting carboxymethyl group modification while subjecting the dispersion liquid to fibrillation treatment, or
(3E) effecting carboxymethyl group modification to prepare a dispersion liquid comprising modified carboxymethylated cellulose and then subjecting the dispersion liquid to fibrillation treatment.

[Fourth preparation method]

A method for preparing the dispersion liquid, the method comprising the steps of:

(4C) preparing a dispersion liquid comprising carboxymethylated cellulose, water, and the aforementioned organic alkali;
(4D) effecting carboxymethyl group modification while subjecting the dispersion liquid to fibrillation treatment, or
(4E) effecting carboxymethyl group modification to prepare a dispersion liquid comprising modified carboxymethylated cellulose and then subjecting the dispersion liquid to fibrillation treatment; and
(4F) adding a water-soluble organic solvent to the dispersion liquid obtained at the previous step.

The aforementioned preparation methods will be described in detail.

2-1. First preparation method

(1) Step (1A)

At this step, a dispersion liquid having a carboxymethylated cellulose nanofiber dispersed in a mixed solvent of water and a water-soluble organic solvent is prepared. Said dispersion liquid can be prepared by subjecting a water dispersion liquid having carboxymethylated cellulose dispersed in water to fibrillation treatment to give a water dispersion liquid of a carboxymethylated cellulose nanofiber, and mixing the obtained water dispersion liquid with a water-soluble organic solvent (procedure i). Alternatively, said dispersion liquid can also be prepared by subjecting a dispersion liquid having carboxymethylated cellulose dispersed in the aforementioned mixed solvent to fibrillation treatment (procedure ii).

1) Procedure i

A water dispersion liquid having carboxymethylated cellulose dispersed in water (hereinafter also referred to as "unfibrillated water dispersion liquid") is subjected to fibrillation treatment to give a water dispersion liquid of a carboxymethylated cellulose nanofiber. The method for preparing carboxymethylated cellulose will be described later. The fibrillation treatment can be performed using either a mixing or stirring apparatus or an emulsifying or dispersing apparatus alone, such as high speed shear mixer or high pressure homogenizer, or using a combination thereof, depending on the need. In this process, as pulp becomes reduced in size (fiber length and diameter), fibers disintegrate to form cellulose nanofibers. In particular, an ultrahigh pressure homogenizer capable of providing a pressure of not less than 100 MPa, preferably not less than 120 MPa, more preferably not less than 140 MPa is preferably used, because the dispersion of cellulose nanofibers proceeds efficiently and also cellulose nanofibers with low viscosity can be prepared efficiently when made into a water dispersion liquid.
The concentration of carboxymethylated cellulose in the unfibrillated water dispersion liquid is preferably in the range of 0.1 to 10 wt.%. The pH of the unfibrillated water dispersion liquid is, for example, not more than 4.
Next, a water-soluble organic solvent is added to the fibrillated water dispersion liquid. The amount of the water-soluble organic solvent added varies with its type, but is preferably in the range of 0.1 to 1000 wt.% relative to the total amount of the cellulose nanofiber dispersion liquid. However, as for water-soluble organic solvents with relatively high affinity with water, such as alcohols and acetone, the upper limit of the amount added can be set to not more than 1000 wt.%. On the other hand, as for water-soluble organic solvents with relatively low affinity with water, such as methyl ethyl ketone, the upper limit of the amount added is preferably set to approximately not more than 500 wt.%. When the amount of the water-soluble organic solvent is less than 0.1 wt.%, the effect to enhance the affinity between the dispersion liquid of the present invention and other materials such as polymer may not be sufficiently exhibited. On the other hand, when the amount of the water-soluble organic solvent added is not less than 10 wt.%, preferably not less than 30 wt.%, the effect to enhance the affinity between the dispersion liquid and other materials is sufficiently exhibited, and also drying

efficiency is sufficiently improved as described below. The thus-obtained dispersion liquid is also referred to as "fibrillated dispersion liquid".

2) Procedure ii

A dispersion liquid having carboxymethylated cellulose dispersed in a mixed solvent of water and a water-soluble organic solvent is subjected to fibrillation treatment to give a dispersion liquid of a carboxymethylated cellulose nanofiber (fibrillated dispersion liquid). The method, etc. of fibrillation and the amount of the water-soluble organic solvent added are as described above in the section regarding procedure i.

3) Method for preparing carboxymethylated cellulose

Cellulose ingredients are various forms of cellulose-based materials. Examples of such ingredients include, but are not limited to: pulps (e.g., bleached or unbleached wood pulps, bleached or unbleached nonwood pulps, and herbaceous pulps derived from refined linters, jute, Manila hemp, kenaf, etc.); natural celluloses such as celluloses produced by microorganisms such as *Acetobacter* species; regenerated celluloses prepared by dissolution of cellulose in a certain solvent such as copper-ammonia solution or morpholine derivative followed by spinning the solution; and fine celluloses prepared by depolymerization of the aforementioned cellulose ingredients by hydrolysis, alkali hydrolysis, enzymatic decomposition, blasting treatment, or mechanical treatment such as vibrating ball milling.

At first, such a cellulose ingredient as mentioned above is provided as a starting ingredient. The ingredient is mixed with a solvent and a mercerizing agent, and mercerized at a reaction temperature of 0 to 70°C, preferably 10 to 60°C, for a reaction time of 15 minutes to 8 hours, preferably 30 minutes to 7 hours. Examples of the solvent that can be used include 3 to 20 wt. times of water or a lower alcohol, more specifically, water, methanol, ethanol, 1-propanol, 2-propanol, 1-butanol, 2-butanol, 2-methyl-1-propanol, 2-methyl-2-propanol, or combinations thereof. The mixing proportion of a lower alcohol, if used, is in the range of 60 to 95 wt.%. Examples of the mercerizing agent that can be used include 0.5 to 20 molar times of an alkali metal hydroxide, more specifically, sodium hydroxide or potassium hydroxide, per anhydrous glucose residue of the starting ingredient.

Next, a carboxymethylating agent is added in an amount of 0.05 to 10.0 molar times per glucose residue, and the mixture is subjected to etherification reaction at a reaction temperature of 30 to 90°C, preferably 40 to 80°C, for a reaction time of 30 minutes to 10 hours, preferably 1 to 4 hours, to give carboxymethylated cellulose. In this process, the degree of substitution with carboxymethyl groups per glucose unit is preferably in the range of 0.01 to 0.50. When this degree of substitution is less than 0.01, there are cases where sufficient nano fibrillation cannot be achieved. On the other hand, when the degree of substitution with carboxymethyl groups per glucose unit is more than 0.50, there are cases where no nanofibers are formed because cellulose tends to swell or dissolve.

The degree of substitution with carboxymethyl groups can be determined by following the procedure described below.

About 2.0 g of a sample is accurately weighed and put into a 300 mL Erlenmeyer flask with a stopper. 100 mL of nitric acid-methanol (a solution prepared by adding 100 mL of premium-grade concentrated nitric acid to 1 L of anhydrous methanol) is added, and the mixture is shaken for 3 hours to convert sodium carboxymethylated cellulose (Na-CMC) to carboxymethylated cellulose (H-CMC). 1.5 to 2.0 g of bone-dry H-CMC is accurately weighed and put into a 300 mL Erlenmeyer flask with a stopper. The H-CMC is soaked in 15 mL of 80% methanol, 100 mL of 0.1 N NaOH is added, and the mixture is shaken at room temperature for 3 hours. Excess NaOH is back-titrated with 0.1 N $H_2SO_4$ using phenolphthalein as an indicator. The degree of substitution with carboxymethyl groups is calculated using the equation given below.

$$\text{Degree of substitution with carboxymethyl groups}$$
$$= [\{100 \times F' - (0.1\ \text{N}\ H_2SO_4\ (\text{mL})) \times F\} / (\text{H-CMC bone-dry mass (g)})] \times 0.1$$
$$= 0.162A / (1 - 0.058A)$$

A: Volume of 1 N NaOH required to neutralize 1 g of H-CMC (mL)
F: Factor of 0.1 $NH_2SO_4$
F': Factor of 0.1 N NaOH

The thus-obtained carboxymethylated cellulose can be collected from the reaction solution by filtration. The carboxymethyl groups in the carboxymethylated cellulose obtained after the reaction form salts thereof containing a

metal ion derived from inorganic alkali for pH adjustment as a counter ion ($-CH_2COOM$, where M is a metal ion). There are three different procedures used to collect carboxymethylated cellulose: 1) carboxymethylated cellulose is filtered out while the carboxymethyl groups are left to form salts thereof; 2) carboxymethylated cellulose is filtered out after the carboxymethyl groups are converted to acid forms thereof ($-CH_2COOH$) by adding an acid to the reaction solution to adjust pH to not more than 3; and 3) carboxymethylated cellulose is filtered out after an organic solvent is added to initiate flocculation. However, procedure 2) is preferred, because conversion to acid forms allows removal of most counter ions (metal ions) present in carboxymethylated cellulose. Further, procedure 2) is preferred also from the viewpoints of handleability, yield and waste liquid disposal. Conversion of carboxymethyl groups to acid forms thereof make it possible to enhance the efficiency of washing with water, to reduce the amount of metal ions present, and to reduce washing frequency.

The amount of metal ions present in carboxymethylated cellulose can be analyzed by various methods; for example, said amount can be simply analyzed by an EPMA method using an electron beam microanalyzer, or by an elemental analysis method by fluorescent X-ray spectroscopy. The content of metal ions in carboxymethylated cellulose collected by filtration while carboxymethyl groups are left to form salt forms thereof is not less than 5 wt.%, whereas the content of metal ions in carboxymethylated cellulose collected by filtration after carboxymethyl groups are converted to acid forms thereof is not more than 5 wt.%.

The collected carboxymethylated cellulose can be purified by repeated washing, so that residues such as catalyst, salts and ions can be removed. Water is preferably used as a washing solution. Further, when washing is done first with hydrochloric acid, etc. under acidic condition of not more than pH 3, more preferably not more than pH 2.6, and then with water, the content of metal ions can be reduced below the limit of detection of the analysis method mentioned above. Alternatively, in order to further reduce the content of remaining metal ions, washing under acidic condition may be done multiple times. It is preferable to repeat washing with water multiple times, because when salts, etc. remain in cellulose, the cellulose is difficult to fibrillate at the subsequent fibrillation step described below.

(2) Step (1B)

An organic alkali is added to the fibrillated dispersion liquid prepared at step (1A) to effect carboxymethyl group modification. The organic alkali is selected from amines, organic onium salts containing a hydroxide ion as a counter ion, and combinations thereof. The amines can be exemplified by primary to tertiary amines. Preferred amines have any of the following structures.

$NH_2R'$ (where R' is an alkyl group with 1 to 10 carbon atoms, an aryl group with 6 to 20 carbon atoms, or an aralkyl group with 7 to 20 carbon atoms)

$NHR'_2$ (where R' is independently an alkyl group with 1 to 10 carbon atoms, an aryl group with 6 to 20 carbon atoms, or an aralkyl group with 7 to 20 carbon atoms)

$NR'_3$ (where R' is independently an alkyl group with 1 to 10 carbon atoms, an aryl group with 6 to 20 carbon atoms, or an aralkyl group with 7 to 20 carbon atoms)

When a primary or secondary amine is used, the group represented by the formula (2) shown above can be introduced to carboxymethylated cellulose. When a tertiary amine is used, the group represented by the formula (3) shown above (with the proviso that one R group is H and three R groups are R') can be introduced to carboxymethylated cellulose.

The organic onium salts containing a hydroxide ion as a counter ion can be exemplified by: ammonium hydroxide salts represented by $NR'_4OH$ (where R' is as defined above, and is preferably independently an alkyl group with 1 to 10 carbon atoms), such as tetramethylammonium hydroxide, tetraethylammonium hydroxide, tetra-n-buthylammonium hydroxide, benzyltrimethylammonium hydroxide, and 2-hydroxyethyltrimethylammonium hydroxide; phosphonium hydroxide salts represented by $PR'_4OH$ (where R' is as defined above), such as tetraethylphosphonium hydroxide; and sulfonium hydroxide salts represented by $SR'_3OH$ (where R' is as defined above), such as trimethylsulfonium hydroxide.

When an ammonium hydroxide salt or a phosphonium hydroxide salt is used, the group represented by the formula (3) shown above (with the proviso that all R groups are R') can be introduced to carboxymethylated cellulose. When a sulfonium hydroxide salt is used, the group represented by the formula (4) shown above can be introduced to carboxymethylated cellulose.

The reaction can be carried out by stirring the fibrillated dispersion liquid containing an organic alkali at room temperature. Stirring can be performed using a known apparatus or using an apparatus used for fibrillation treatment as mentioned above. Nano-dispersion proceeds also during this stirring process, and it can be expected that as R' in the organic alkali becomes more bulky, nano-dispersion is promoted and the viscosity of the dispersion liquid decreases.

The amount of the organic alkali can be set at a level equimolar to or higher than the amount of carboxymethyl groups. Unlike carboxylated (oxidized) cellulose, carboxymethyl cellulose can be fully modified (hydrophobized) since its dispersion liquid is less colored.

The unfibrillated dispersion liquid commonly has a pH of not more than 4; thus, the use of an organic alkali allows neutralization reaction to proceed and this makes it possible to introduce hydrophobic groups to carboxymethyl

groups. The use of an organic alkali avoids metal ions from entering the dispersion liquid of the present invention. Dispersion liquids containing no metal ion are suitable for electronic applications.

By the use of an organic alkali, dispersion treatment can be carried out with lower energy for a shorter period of time, as compared with the case of using an inorganic alkali. In addition, the transparency of the finally obtained modified CM-CNF dispersion liquid can be enhanced. The reason for this is considered to be that, not only because the affinity between cellulose nanofibers modified with an organic alkali and a dispersion medium containing a water-soluble organic solvent is enhanced, but also because groups modified with an organic alkali are larger than those modified with an inorganic alkali, the effect to separate cellulose fibers in the dispersion medium becomes more intense.

(3) Posttreatment, etc.

The thus-prepared modified CM-CNF dispersion liquid contains an amine compound or organic onium ion derived from an organic alkali. When this dispersion liquid is isolated, washed, dried, filtrated or otherwise treated using a known technique, a modified CM-CNF can be obtained. As a washing solution, the mixed solvent described above is preferably used. In contrast, when water is removed from said prepared dispersion liquid, a dispersion liquid not containing water or containing a certain amount of water can be obtained. In this process, when a solvent having a boiling point exceeding 100°C at normal pressures is used as a water-soluble organic solvent, water can be preferentially removed during drying, so that the resulting modified CM-CNF dispersion liquid contains a dispersion medium containing high concentrations of organic solvent or not containing water.

2-2. Second preparation method

Step (2A) can be carried out in the same way as step (1A) except that no water-soluble organic solvent as described above is used.

Step (2B) can be carried out in the same way as step (2A) except that the aforementioned water-soluble organic solvent is added to a dispersion liquid obtained at step (2A). The amount added, etc. of the water-soluble organic solvent are as described above in the section regarding the first preparation method.

2-3. Third preparation method

(1) Step (3C)

At this step, a dispersion liquid (unfibrillated dispersion liquid) comprising carboxymethylated cellulose, a mixed solvent of water and a water-soluble organic solvent, and the aforementioned organic alkali is prepared. The types and amounts added of the respective components are as described above in the section regarding the first preparation method.

(2) Step (3D)

At this step, carboxymethyl groups are modified while the aforementioned unfibrillated dispersion liquid is subjected to fibrillation treatment.

(3) Step (3E)

At this step, carboxymethyl groups are modified to prepare a dispersion liquid comprising the aforementioned modified carboxymethylated cellulose, and then the dispersion liquid is subjected to fibrillation treatment.

The fibrillation method and the structures, etc. of modified groups, as used in the third preparation method, are as described above in the section regarding the first preparation method.

2-4. Fourth preparation method

(1) Step (4C)

At this step, a dispersion liquid comprising carboxymethylated cellulose, water, and the aforementioned organic alkali is prepared. The amount added, etc. of the organic alkali are as described above in the section regarding the first preparation method.

(2) Step (4D)

At this step, carboxymethyl groups are modified while the aforementioned dispersion liquid is subjected to fibrillation treatment.

(3) Step (4E)

At this step, carboxymethyl groups are modified to prepare a dispersion liquid comprising the carboxymethylated cellulose, and then the dispersion liquid is subjected to fibrillation treatment.

(4) Step (4F)

At this step, a water-soluble organic solvent is added to the dispersion liquid obtained at the previous step.
The method, etc. of fibrillation and the structures, etc. of modified groups, as used in the fourth preparation method, are as described above in the section regarding the first preparation method.
Posttreatment of the modified CM-CNF dispersion liquids prepared in the second to fourth preparation methods is done in the same way as described above in the section regarding the first preparation method.

3. Characteristics and intended use

The dispersion liquid of the present invention has excellent transparency. The transparency of the inventive dispersion liquid is preferably not less than 85% as measured using a dispersion liquid with a solids concentration of 1.0 wt.%. When the inventive dispersion liquid has a transparency of not less than 85%, it can exhibit sufficient transparency even when kneaded with a resin that requires high transparency. In particular, the transparency of the inventive dispersion liquid is more preferably not less than 90% as measured using a dispersion liquid with a solids concentration of 1.0 wt.%. Transparency can be determined by deforming the above-obtained cellulose nanofiber dispersion liquid using an ultrasonic apparatus, then measuring its transparency at a wavelength of 660 nm in an ultraviolet and visible spectrophotometer (UV-1800, produced by Shimadzu Corporation), and performing computation based on measured values according to the equation given below.

$$\text{Transparency of CNF dispersion liquid (\%)} = \text{Measured value for CNF dispersion liquid / measured value for aqueous medium alone} \times 100$$

When a water-soluble organic solvent is added to a CM-CNF dispersion liquid containing an inorganic alkali metal ion (*e.g.*, $Na^+$ derived from sodium hydroxide) as a counter ion, dispersed cellulose nanofibers flocculate and become turbid and heterogeneous due to flocculation. However, the dispersion liquid obtained according to the present invention does not have such problems since it does not contain an inorganic alkali metal ion. Therefore, a water-soluble organic solvent can be added to the dispersion liquid of this invention. The dispersion liquid further comprising such an organic solvent is suitable for complexation with other materials such as polymer. The amount of such an organic solvent added is determined as appropriate in consideration of the solids content, viscosity, etc. of the CNF dispersion liquid.
The dispersion liquid of the present invention may further contain, as an additive, a compound having a functional group. Examples of such a functional group include silanol group, amino group, epoxy group, hydroxyl group, carbodiimide group, isocyanate group, alkoxy group, and oxazoline group. Such an additive is capable of reacting with the hydroxyl, carboxyl or other functional groups in the modified CM-CNF, thereby helping enhance water resistance, moisture resistance, etc.
Examples of compounds having a silanol group include, but are not limited to, silane coupling agents, alkoxysilanes, and hydrolysates thereof. Silane coupling agents are silane compounds having two or more hydrolyzable groups attached to the silicon atom. Hydrolyzable groups are hydrolyzed to convert to hydroxyl groups, producing silanol groups (Si-OH). Exemplary hydrolyzable groups include alkoxy group, acetoxy group, chlorine atom, and the like, with alkoxy group being preferred. In other words, preferred silane coupling agents are alkoxysilanes, in which the alkyl group in the alkoxy group is preferably an alkyl group with 1 to 5 carbon atoms, more preferably a methyl or ethyl group, still more preferably an ethyl group.
When a silane coupling agent contains only 2 or 3 hydrolyzable groups, it is preferred that the silane coupling agent further contain an additional functional group. Said additional functional group is preferably a functional group

capable of reacting or interacting with the functional groups present in the modified CM-CNF or with the functional groups present on the surface of other materials used to complex with the dispersion liquid (*e.g.*, carboxyl, hydroxyl, and other functional groups). Examples of said additional functional group include, but are not limited to, amino group, epoxy group, methacryloxy group, acryloxy group, vinyl group, ureide group, mercapto group, chlorine atom, and isocyanate group. Among them, amino group, epoxy group, methacryloxy group, and acryloxy group are preferred, with amino group being more preferred.

Said additive is preferably homogeneously mixed in the dispersion liquid of the present invention. Since the dispersion liquid of this invention is excellent in affinity with a hydrophilic organic solvent such as alcohol and contains no metal ion such as sodium, said additive can be homogeneously mixed and reacted with the inventive dispersion liquid.

Composite materials can be prepared by mixing the modified CM-CNF of the present invention or the dispersion liquid comprising the same with other materials such as resin. Examples of the resin include, but are not limited to, epoxy resin, polyester resin, acrylic resin, urethane resin, polyolefin resin, polyimide resin, and polyamide resin. Since the modified CM-CNF of this invention can be homogeneously finely dispersed in such a resin, transparent composite materials can be obtained. Further, such composite materials have high mechanical strength, low linear expansion coefficient, and high elastic modulus. Said composite materials can be prepared by, for example, a technique involving mixing the dispersion liquid with a resin solution obtained by dissolving the aforementioned resin in an organic solvent, a technique involving mixing the dispersion liquid with the aforementioned resin, or a technique involving mixing the dispersion liquid with an emulsion of the aforementioned resin. The dispersion liquid of this invention can be mixed even with such an emulsion without causing reflocculation or precipitation.

Said composite materials not only comprise the modified CM-CNF of the present invention and the aforementioned resin, but also may further contain any other additives depending on the need. Examples of such additives include the aforementioned functional compounds (*e.g.*, silane coupling agents), filler, leveling agent, antifoaming agent, inorganic particles, organic particles, lubricant, antistatic agent, ultraviolet absorber, pigments, dye, light stabilizer, antioxidant, plasticizer, flame retardant, dispersant, and blowing agent. Said composite materials are useful as transparent substrates, paints, inks, film substrates, compacts, containers, casings, and electronic members. Inter alia, said composite materials are particularly useful as transparent substrates, since those composite materials comprising the modified CM-CNF of this invention are excellent in transparency.

EXAMPLES

Hereunder, the present invention will be specifically described by way of examples, but it should be noted that this invention is not limited to the examples given below.

[Preparation of carboxymethyl cellulose]

A stirrer capable of mixing pulp was charged with 200 g by dry weight of pulp (NBKP, produced by Nippon Paper Industries Co., Ltd.) and 440 g by dry weight of sodium hydroxide, and water was added to give a pulp solids concentration of 15 wt.%. Then, after being stirred at 30°C for 30 minutes, the mixture was heated to 70°C, and 585 g (as calculated for active ingredient) of sodium monochloroacetate was added. After being reacted for 1 hour, the reaction product was taken out, neutralized, and washed to obtain carboxymethyl cellulose with a degree of substitution with carboxymethyl groups of 0.24 per glucose unit.

To the resulting carboxymethyl cellulose, hydrochloric acid was added, and the mixture was dehydrated to adjust the solids concentration at pH 2.4 to 10 wt.%.

[Preparation of oxidized cellulose]

Five grams (bone-dry) of bleached unbeaten softwood pulp (produced by Nippon Paper Industries Co., Ltd.) was added to 500 mL of an aqueous solution of 78 mg (0.5 mmol) of TEMPO (produced by Tokyo Chemical Industry Co., Ltd.) and 756 mg (7.35 mmol) of sodium bromide (produced by Wako Pure Chemical Corporation), and the contents were stirred to ensure that the pulp was homogeneously dispersed in the solution. To the dispersion liquid, 2.3 mmol of sodium hypochlorite (produced by Wako Pure Chemical Corporation) was added in aqueous solution form, and then sodium hypochlorite was gradually added using a liquid feed pump at an addition rate of 0.23 mmol/min. per g of pulp, to thereby oxidize the pulp. The addition of sodium hypochlorite was continued until the total amount added thereof reached 22.5 mmol. Since the pH of the reaction system decreased during the reaction, an aqueous 3 N sodium hydroxide solution was successively added to adjust the pH to 10. The period from the start of addition of this solution (*i.e.*, from the time when the pH dropped at the start of the oxidation reaction) until the end of this addition (*i.e.*, until the time when the pH no longer dropped at the end of the oxidation reaction) was regarded as a reaction period. The reaction solution was neutralized to neutral with hydrochloric acid, and then the neutralized solution was filtered through a glass filter and

well washed with water to obtain oxidized cellulose.

To the oxidized cellulose, hydrochloric acid was added, and the mixture was dehydrated to adjust the solids concentration at pH 2.4 to 10 wt.%.

[Measurement of the amount of carboxyl groups in oxidized cellulose]

The amount of carboxyl groups in the oxidized cellulose was measured by the procedure described below.

Sixty milliliters of a 0.5 wt.% slurry of the oxidized cellulose was prepared. Then, after an aqueous 0.1 M hydrochloric acid solution was added to the slurry to adjust the pH to 2.5, the electrical conductivity of the slurry was measured until the pH reached 11 as an aqueous 0.05 N sodium hydroxide solution was added dropwise. Based on the amount (a) of sodium hydroxide consumed during a weakly acidic neutralization phase which showed gradual change in electrical conductivity, the amount of carboxyl groups was calculated using the equation given below.

$$\text{Amount of carboxyl groups [mmol/g oxidized cellulose]}$$
$$= a\ [\text{mL}] \times 0.05 / \text{weight of oxidized cellulose [g]}.$$

The results of this measurement revealed that the amount of carboxyl groups in the obtained oxidized cellulose was 1.60 mmol/g.

<Example 1>

[Fibrillation]

The above-obtained water dispersion liquid of carboxymethylated cellulose with a solids concentration of 10 wt.% was diluted to prepare a 3.0 wt.% water dispersion liquid (unfibrillated water dispersion liquid), which was treated five times using an ultrahigh pressure homogenizer (at 20°C, 140 MPa) to obtain a water dispersion liquid of a carboxymethylated cellulose nanofiber.

[Solvent addition]

To the obtained dispersion liquid, N-methyl-2-pyrrolidone (hereinafter referred to as "NMP") was added to give a solids concentration of 2.0 wt.%, whereby a CM-CNF dispersion liquid comprising a water-soluble organic solvent was prepared.

[Modification with an organic alkali]

To the above-prepared dispersion liquid, tetrabutylammonium hydroxide was added in aqueous solution form in a molar amount equal to the degree of substitution with carboxymethyl groups of the cellulose nanofibers, and the mixture was stirred.

[Dispersion]

The resulting dispersion liquid was treated twice using an ultrahigh pressure homogenizer (at 20°C, 140 MPa) to obtain a dispersion liquid of a modified carboxymethylated cellulose nanofiber (modified CM-CNF).

[Dehydration]

To the modified CM-CNF dispersion liquid, NMP was added in an amount equal to 30 times the solids weight, and then the mixture was dried at 105°C to a water content of not more than 5.0 wt.%. The dispersion liquid thus obtained was a modified CM-CNF dispersion liquid having a solids content of 2.1% (NMP:water ratio (by weight) in dispersion medium = 94.9:5.1), a transparency of 94%, and no color.

<Example 2>

[Solvent addition]

To the water dispersion liquid (unfibrillated water dispersion liquid) of carboxymethylated cellulose with a solids concentration of 10 wt.% as obtained in Example 1, water and NMP were added to prepare a dispersion liquid comprising an aqueous organic solvent. The prepared dispersion liquid had a solids concentration of 1.7 wt.% and a water:NMP ratio of 50:50.

[Modification with an organic alkali]

To the above-prepared dispersion liquid, tetrabutylammonium hydroxide was added in aqueous solution form in a molar amount equal to the degree of substitution with carboxymethyl groups of the carboxymethyl cellulose, and the mixture was stirred.

[Fibrillation]

The obtained dispersion liquid was treated five times using an ultrahigh pressure homogenizer (at 20°C, 140 MPa) to obtain a dispersion liquid of a modified carboxymethylated cellulose nanofiber (modified CM-CNF).

[Dehydration]

To the modified CM-CNF dispersion liquid, NMP was added in an amount equal to 30 times the solids weight, and then the mixture was dried with stirring at 60°C under reduced pressure to give a water content of not more than 5.0 wt.%. The dispersion liquid thus obtained was a modified CM-CNF dispersion liquid having a solids content of 1.7% (NMP:water ratio (by weight) in dispersion medium = 99.8:0.2), a transparency of 94%, and no color.

<Comparative Example 1>

A dispersion liquid of a modified oxidized cellulose nanofiber was prepared by the same procedure as in Example 1, except that oxidized cellulose was used instead of carboxymethylated cellulose. The prepared dispersion liquid of a modified oxidized cellulose nanofiber showed a transparency of 95% but took on color.

<Comparative Example 2>

A dispersion liquid of a modified oxidized cellulose nanofiber was prepared by the same procedure as in Example 2, except that oxidized cellulose was used instead of carboxymethylated cellulose. The prepared dispersion liquid of a modified oxidized cellulose nanofiber showed a transparency of 94% but took on color.

<Comparative Example 3>

The same steps up to the fibrillation step were performed as in Example 2, except that no modification with an organic alkali was carried out, but cellulose fibrillation was not achieved successfully because cellulose fibers flocculated and clogged the fibrillation apparatus.

The modified CM-CNFs obtained in Examples 1 and 2 were dispersed in a dispersion media comprising an organic solvent to provide dispersion liquids having a transparency of not less than 90% and no color. On the other hand, the dispersion liquids of a modified oxidized cellulose nanofiber as obtained in Comparative Examples 1 and 2 took on color due to heating for dehydration. In Comparative Example 3 where no modification with an organic alkali was carried out, the dispersibility of the dispersion liquid was lost with an increase in the proportion of an organic solvent in a dispersion medium, thereby causing precipitation.

The modified CM-CNFs obtained in Examples 1 and 2 were dispersed in the dispersion media comprising an organic solvent to provide dispersion liquids having a transparency of not less than 90% and no color. On the other hand, the dispersion liquids of a modified oxidized cellulose nanofiber obtained in Comparative Examples 1 and 2 took on color due to heating for dehydration.

## Claims

1. A dispersion liquid having a modified carboxymethylated cellulose nanofiber dispersed in a dispersion medium, wherein the dispersion medium comprises an organic solvent, wherein the modified carboxymethylated cellulose nanofiber comprises a glucose unit represented by the formula (1):

[Chem. 1]

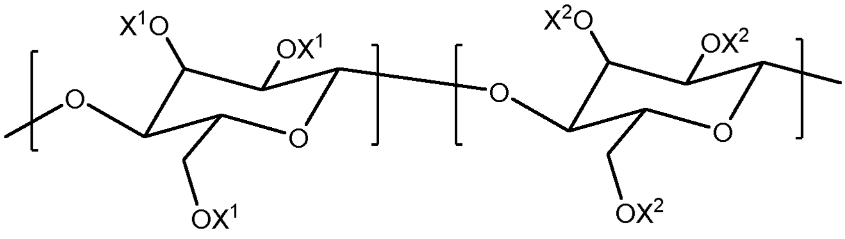

(1)

(wherein $X^1$ is independently H or a group represented by $-CH_2COOH$, $X^2$ is independently H, $-CH_2COOH$, or a group represented by any of the formulas (2) to (4), with the proviso that at least one of $X^2$ groups is a group represented by any of the formulas (2) to (4))

[Chem. 2]

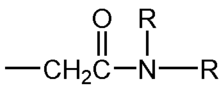

(2)

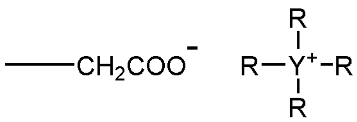

(3)

$-CH_2COOR'$ (4)

(in the formula (2), R is independently H, an alkyl group with 1 to 10 carbon atoms, an aryl group with 6 to 20 carbon atoms, or an aralkyl group with 7 to 20 carbon atoms, with the proviso that at least one of R groups is said alkyl group, said aryl group, or said aralkyl group, in the formula (3), Y is N or P, and R is defined in the same way as in the formula (2), in the formula (4), R' is an alkyl group with 1 to 10 carbon atoms, an aryl group with 6 to 20 carbon atoms, or an aralkyl group with 7 to 20 carbon atoms).

2. The dispersion liquid according to claim 1, wherein the organic solvent has a boiling point of 50 to 250°C at normal pressures.

3. The dispersion liquid according to claim 1 or 2, wherein the organic solvent is a water-soluble organic solvent selected from the group consisting of methanol, ethanol, 1-propanol, 2-propanol, 1-butanol, 2-butanol, 2-methyl-1-propanol, 2-methyl-2-propanol, acetone, methyl ethyl ketone, 1,4-dioxane, N-methyl-2-pyrrolidone, tetrahydrofuran, N,N-dimethylformamide, N,N-dimethylacetamide, dimethyl sulfoxide, acetonitrile, and combinations thereof.

4. The dispersion liquid according to any of claims 1 to 3, wherein the cellulose nanofiber has a degree of substitution with X groups of 0.02 to 0.50, which is defined by the number of X groups, where $X^1$ and $X^2$ are each $-CH_2COOH$ or represented by any of the formulas (2) to (4), per glucose unit.

5. The dispersion liquid according to any of claims 1 to 4, wherein the modified carboxymethylated cellulose nanofiber has a number-average fiber diameter of 2 to 50 nm.

6. The dispersion liquid according to any of claims 1 to 5, wherein the dispersion medium comprises a water-soluble organic solvent and water.

**7.** A method for preparing the dispersion liquid according to claim 1, the method comprising the steps of:

(1A) preparing a dispersion liquid having a carboxymethylated cellulose nanofiber dispersed in a mixed solvent of water and a water-soluble organic solvent; and
(1B) adding to the dispersion liquid an organic alkali selected from amines, organic onium salts containing a hydroxide ion as a counter ion, and combinations thereof, to effect carboxymethyl group modification.

**8.** A method for preparing the dispersion liquid according to claim 1, the method comprising the steps of:

(2A) preparing a dispersion liquid having a carboxymethylated cellulose nanofiber dispersed in water; and
(2B) adding to the dispersion liquid an organic alkali selected from amines, organic onium salts containing a hydroxide ion as a counter ion, and combinations thereof, as well as a water-soluble organic solvent, to effect carboxymethyl group modification.

**9.** A method for preparing the dispersion liquid according to claim 1, the method comprising the steps of:

(3C) preparing a dispersion liquid comprising carboxymethylated cellulose, a mixed solvent of water and a water-soluble organic solvent, as well as an organic alkali selected from amines, organic onium salts containing a hydroxide ion as a counter ion, and combinations thereof; and
(3D) effecting carboxymethyl group modification while subjecting the dispersion liquid to fibrillation treatment, or (3E) effecting carboxymethyl group modification to prepare a dispersion liquid comprising modified carboxymethylated cellulose and then subjecting the dispersion liquid to fibrillation treatment.

**10.** A method for preparing the dispersion liquid according to claim 1, the method comprising the steps of:

(4C) preparing a dispersion liquid comprising carboxymethylated cellulose, water, as well as an organic alkali selected from amines, organic onium salts containing a hydroxide ion as a counter ion, and combinations thereof;
(4D) effecting carboxymethyl group modification while subjecting the dispersion liquid to fibrillation treatment, or (4E) effecting carboxymethyl group modification to prepare a dispersion liquid comprising modified carboxymethylated cellulose and then subjecting the dispersion liquid to fibrillation treatment; and
(4F) adding a water-soluble organic solvent to the dispersion liquid obtained at the previous step.

**11.** The method according to any of claims 7 to 10, wherein the organic alkali is a quaternary ammonium salt containing a hydroxide ion as a counter ion.

**12.** The method according to any of claims 7 to 10, wherein the organic alkali is a primary, secondary or tertiary amine compound.

**INTERNATIONAL SEARCH REPORT**

International application No. PCT/JP2017/004618

A. CLASSIFICATION OF SUBJECT MATTER
*C08B11/12*(2006.01)i, *B82Y30/00*(2011.01)i, *C08J3/03*(2006.01)i, *C08J3/09*(2006.01)i

According to International Patent Classification (IPC) or to both national classification and IPC

B. FIELDS SEARCHED

Minimum documentation searched (classification system followed by classification symbols)
C08B11/12, B82Y30/00, C08J3/03, C08J3/09

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2014-109033 A (Xerox Corp.), 12 June 2014 (12.06.2014), & US 8647422 B1 & DE 102013223280 A1 & KR 10-2014-0071230 A | 1-12 |
| A | US 2014/0154502 A1 (Xerox Corp.), 05 June 2014 (05.06.2014), (Family: none) | 1-12 |
| A | WO 1999/014295 A1 (THE PROCTER & GAMBLE CO.), 25 March 1999 (25.03.1999), & JP 2001-516793 A & US 6111056 A & EP 1015540 A1 & CN 1278296 A | 1-12 |
| A | JP 2011-127067 A (Teijin Ltd.), 30 June 2011 (30.06.2011), (Family: none) | 1-12 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 April 2017 (25.04.17) | 09 May 2017 (09.05.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/004618

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-101694 A (Toppan Printing Co., Ltd.), 04 June 2015 (04.06.2015), (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011115154 A


### Non-patent literature cited in the description


- *Biomacromolecules,* 2006, vol. 7 (6), 1687-1691